# FASCICULE DE BREVET EUROPEEN

(11) **EP 3 429 339 B1**
(45) Date de publication et mention de la délivrance du brevet: **26.10.2022**
(21) Numéro de dépôt: 17715518.1
(22) Date de dépôt: 14.03.2017
(51) Int. Cl.: A01K 1/01, A01K 1/015

(54) **SYSTÈME POUR LA COLLECTE DES DÉJECTIONS S'ÉCOULANT SUR LE SOL D'UNE ENCEINTE POUR L'ÉLEVAGE D'ANIMAUX, PAR EXEMPLE DE BOVINS**
SYSTEM ZUM AUFFANGEN VON AM BODEN FALLENDEN EXKREMENTEN IN EINEM GEBÄUDE FÜR NUTZTIERE, ZUM BEISPIEL RINDER
SYSTEM FOR COLLECTING EXCREMENT FALLING ON THE FLOOR OF AN ANIMAL HOUSE, FOR EXAMPLE A STALL

(30) Priorité: 15.03.2016 FR 1652168
(43) Date de publication de la demande: 23.01.2019
(73) Titulaire: Bioret Agri-Logette Confort, 44390 Nort sur Erdre (FR)
(72) Inventeur: BIORET, Jean-Vincent, 44390 Petit Mars (FR); DAUBELCOUR, Yannick, 44470 Carquefou (FR)
(74) Mandataire: Jacobacci Coralis Harle
(86) Numéro de dépôt international: PCT/FR2017/050579
(87) Numéro de publication internationale: WO 2017/158281

(56) Documents cités:
- EP-A1- 2 941 954
- WO-A1-00/62603
- NL-A- 7 013 585
- US-A- 4 231 325

## Description

### DOMAINE TECHNIQUE AUQUEL SE RAPPORTE L'INVENTION

La présente invention concerne un système pour la collecte des déjections (notamment des liquides) s'écoulant sur le sol d'une enceinte pour l'élevage d'animaux, par exemple de bovins (bovins laitiers et/ou bovins à viande), en particulier pour l'aménagement des couloirs de circulation d'une telle enceinte d'élevage.

### ARRIERE-PLAN TECHNOLOGIQUE

Le confort des animaux constitue un paramètre déterminant dans le rendement d'un élevage, qui influence notamment la santé, la prise alimentaire, la fertilité et la longévité des animaux.

Ce confort des animaux est régi en particulier par des obligations légales qui sont définies dans les Traités d'Amsterdam (1999) et de Lisbonne (2009) relatifs au Protocole sur la protection et le bien-être des animaux, ainsi que par l'adoption de la seconde stratégie européenne pour le bien-être animal.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Ces déjections sont en plus susceptibles de rendre le sol glissant, avec les risques de chute et de blessure qui en découlent.

Plusieurs systèmes d'évacuation des déjections coexistent à ce jour : les systèmes d'évacuation mécanique, les systèmes de « châsse d'eau » et les systèmes de caillebotis.

Dans le cadre d'une solution par « évacuation mécanique », les déjections présentes sur le sol sont raclées une à plusieurs fois par jour par un dispositif de raclage dénommé rabot (manœuvré par un tracteur ou par des moyens automatiques), pour être amenées jusqu'à une fosse de collecte située hors du bâtiment d'élevage.

Toutefois, la séparation des urines et des fèces n'est pas optimale au sein d'un tel système d'évacuation, constituant ainsi une source importante d'ammoniac. De plus, l'installation d'un tel système d'évacuation implique des travaux de gros œuvre importants, qui sont difficiles à envisager dans une enceinte d'élevage existante.

Avec une « chasse d'eau », un liquide de chasse évacue énergiquement les déjections dans un caniveau puis vers une fosse extérieure.

Or, là encore, la séparation des urines et des fèces n'est pas optimale au sein d'un tel système d'évacuation, constituant encore une source importante d'ammoniac. De plus, la mise en œuvre d'un tel système conduit à une humidification importante des sols de l'enceinte d'élevage, susceptible de générer des problèmes d'adhérence et d'hygiène.

Plus généralement, un revêtement de sol excessivement humide est susceptible de provoquer des problèmes sanitaires au niveau des pieds des animaux, notamment de boiteries, constituant un trouble majeur de santé en élevage.

Parmi les infections à l'origine de boiteries, la dermatite digitée, encore appelée « maladie de Mortellaro », est la plus problématique.

Il existe par conséquent un besoin de solutions techniques permettant une réduction de l'humidité des surfaces d'appui sur le sol des enceintes d'élevage avec une évacuation efficace des liquides (en particulier des urines), avantageusement cela sans nécessiter des travaux de gros œuvre importants, de sorte à améliorer les conditions d'adhérence et les conditions sanitaires des animaux.

Les documents EP-2 941 954, NL-7 013 585, WO-00/62603 et US-4 231 325 cherchent à proposer de telles solutions techniques.

En particulier, le document EP-2 941 954 décrit un système de sol pour étable, comprenant un sol muni de rainures s'ouvrant sur un couple de tubes superposés qui est adapté à l'évacuation des solides et liquides.

De préférence, le sol de l'étable est réalisé en béton et le couple de tubes est réalisé en plastique. Les couples de tubes ont chacun une section en arc de cercle.

Un dispositif de raclage, pour l'évacuation des déjections, chemine dans ces tubes : une corde sans fin munie de disques répartis sur sa longueur.

Un tel dispositif de raclage intervient ainsi uniquement dans sa fonction de raclage des tubes, sans pouvoir servir de support aux déjections solides ni participer à une séparation des déjections solide / liquide.

Il existe également un intérêt pour des solutions simples qui permettent éventuellement une certaine séparation des urines et des fèces, de manière à limiter la production d'ammoniac dans les enceintes d'élevage.

### OBJET DE L'INVENTION

Dans ce contexte, la demanderesse a développé un nouveau système pour la collecte des déjections s'écoulant sur le sol d'une enceinte pour l'élevage d'animaux, visant à améliorer les conditions d'hygiène dans une enceinte d'élevage, notamment par une gestion optimale des déjections.

Le système de collecte selon l'invention est caractérisé par le fait qu'il comprend les caractéristiques de la revendication indépendante 1, et notamment :
(i) un revêtement de sol, comprenant :
   - une surface supérieure d'appui sur laquelle les animaux sont destinés à prendre appui, et
   - des conduits qui sont ménagés dans ledit revêtement de sol et qui s'ouvrent au niveau de ladite surface supérieure d'appui, pour permettre l'écoulement desdits déjections,
      lesquels conduits comprennent, d'une part, des rainures réparties sur ledit revêtement de sol et, d'autre part, au moins un profilé de guidage rapporté dans l'une au moins desdites rainures,
      lesquelles rainures comportent chacune au moins une ouverture supérieure qui débouche au niveau de ladite surface supérieure d'appui,
      lequel au moins un profilé de guidage, destiné à recevoir lesdites déjections, comporte au moins une ouverture supérieure agencée en regard de ladite au moins une ouverture supérieure de la rainure associée, pour permettre l'écoulement des déjections dans ledit profilé de guidage depuis ladite surface supérieure d'appui,
(ii) des moyens pour la collecte des déjections circulant le long dudit au moins un profilé de guidage, et
(iii) des moyens pour convoyer les déjections au sein desdits profilés de guidage, de manière à générer une circulation desdites déjections le long desdits profilés de guidage et en direction desdits moyens de collecte.

Un tel système permet une évacuation automatique et continue des liquides (notamment des urines) depuis la surface supérieure d'appui, jusqu'auxdits conduits.

La surface supérieure d'appui du revêtement de sol reste ainsi en permanence relativement peu humide, participant ainsi à améliorer les caractéristiques qualitatives du sol sur le plan de l'adhérence et de l'hygiène.

Cette structure permet également une séparation rapide et relativement efficace des urines par rapport aux fèces, pour limiter la production d'ammoniac au sein de l'enceinte d'élevage.

En effet, les urines vont tendre à être évacuées vers les conduits, pour leur entrainement par les moyens de convoyage ; les fèces vont quant à elles tendre à rester sur la surface supérieure d'appui, pour leur évacuation par raclage mécanique (par exemple avec un rabot) ou par raclage aqueux (par exemple hydrocurage).

Un tel système selon l'invention est en plus adapté à être implanté de manière simple au sein d'une enceinte d'élevage nouvelle ou existante (amélioration ou rénovation), cela sans nécessiter la mise en œuvre de travaux de gros œuvre importants.

La surface supérieure d'appui moins humide permet aussi à l'onglon des bovins d'être plus dur, ce qui participe à la bonne santé du pied de ces animaux et qui contribue à diminuer les risques de glissades des animaux.

Dans cet environnement moins humide et moins productif en ammoniac, le niveau bactérien et les pics de prolifération sont maintenus bas, ce qui rend la lutte contre les maladies du pied beaucoup plus simple.

Un tel système de collecte est en plus particulièrement intéressant dans le cas d'un sol recouvert de paille.

En effet, la surface supérieure d'appui tend à maintenir les matières solides (notamment la paille et les fèces) ; ainsi, ces matières solides sont susceptibles d'être raclées pour le nettoyage de ladite surface supérieure d'appui. Les moyens de convoyage sont ainsi protégés efficacement au sein des conduits, sans risque (ou tout au moins en réduisant les risques) d'interagir avec les matières solides de sorte à assurer un phénomène de circulation optimal pour les déjections dans les conduits respectifs.

Les profilés de guidage vont en plus permettre :
- une réduction des efforts et des frottements liés au déplacement des moyens de convoyage;
- une conduction optimale des déjections dans les conduits, jusqu'aux moyens de collecte ;
- le cas échéant, un alignement optimal des tapis par rapport aux poulies. Le présent système présente encore deux avantages potentiels suivants :
- une protection des moyens de convoyage manœuvrés dans les conduits, et
- un masquage visuel des moyens de convoyage manœuvrés dans les conduits, de sorte à éviter une perturbation des animaux.

Selon l'invention
- ledit au moins un profilé de guidage comporte une paroi supérieure dans laquelle est ménagée au moins une ouverture supérieure ; de préférence, la paroi supérieure des profilés de guidage comporte plusieurs ouvertures supérieures, réparties sur sa longueur, ou une ouverture supérieure longitudinale, s'étendant sur toute sa longueur ;
- les moyens de convoyage comprennent un organe d'entrainement comportant deux parties superposées dans l'un desdits profilés de guidage : une partie supérieure, apte à servir de support aux déjections solides tout en autorisant l'écoulement des déjections liquides, et une partie inférieure, apte à convoyer les déjections liquides s'écoulant depuis ladite partie supérieure ;
- ledit au moins un profilé de guidage comporte une paroi intermédiaire pour définir une chambre inférieure et une chambre supérieure dans lesquelles cheminent les moyens de convoyage, laquelle paroi intermédiaire comporte au moins une ouverture traversante, et les moyens de convoyage comprennent un organe d'entrainement comportant deux parties : une partie supérieure, destinée à cheminer dans la chambre supérieure, apte à servir de support aux déjections solides tout en autorisant l'écoulement des déjections liquides, et une partie inférieure, destinée à cheminer dans la chambre inférieure, apte à convoyer les déjections liquides s'écoulant depuis ladite chambre supérieure ; dans ce cas, les moyens de convoyage comprennent une bande sans fin comportant un brin inférieur et un brin supérieur, cheminant respectivement dans les chambres inférieure et supérieure dudit profilé de guidage ; encore dans ce cas, avantageusement, ladite au moins une ouverture traversante de la paroi intermédiaire s'étend en regard de ladite au moins une ouverture supérieure du profilé de guidage et de ladite au moins une ouverture supérieure de la rainure associée, et la bande sans fin comporte une largeur supérieure, d'une part, à la largeur de ladite au moins une ouverture traversante de la paroi intermédiaire et, d'autre part, à la largeur de ladite au moins une ouverture supérieure du profilé de guidage et/ou de ladite au moins une ouverture supérieure de la rainure associée ;
- les moyens de convoyage comprennent de préférence au moins une bande sans fin comportant
   deux faces opposées dont l'une au moins est munie de plots formant des surfaces de convoyage;
- ledit au moins un profilé de guidage est réalisé dans un matériau plastique.

Selon un mode de réalisation préféré, le revêtement de sol comprend une surface supérieure d'appui réalisée dans un matériau apte à subir une déformation élastique, dont les conduits sont ménagés sous ladite surface supérieure d'appui, et dont ladite au moins une ouverture supérieure dudit au moins un conduit s'étend entre ladite surface supérieure d'appui et ledit conduit, pour l'écoulement des déjections depuis ladite surface supérieure d'appui jusqu'auxdits conduits.

Dans ce cas, de préférence, le revêtement de sol comporte au moins un tapis dont :
- une première face forme la surface supérieure d'appui adaptée à l'appui des animaux, et
- une seconde face, apte à reposer sur une surface support,
   l'une au moins desdites faces comporte les rainures munies chacune d'une ouverture longitudinale,
   et les ouvertures supérieures des rainures sont ménagées au sein dudit tapis.

De préférence encore, le revêtement de sol comporte au moins un tapis dont :
- une première face forme la surface supérieure d'appui adaptée à l'appui des animaux, et
- une seconde face, apte à reposer sur une surface support, comporte les rainures munies chacune d'une ouverture longitudinale inférieure.

Les ouvertures supérieures des rainures sont ménagées au sein dudit tapis.

Selon une autre forme de réalisation, les rainures comportent une ouverture longitudinale supérieure, débouchant au niveau de la surface supérieure d'appui.

Dans ce cas, de préférence, le revêtement de sol comprend :
- une chape réalisée en bitume ou en béton, dans laquelle sont ménagées lesdites rainures, ou
- un ensemble de longerons qui sont solidarisés avec une surface support, cela de manière juxtaposée et tout en préservant un espacement définissant lesdites rainures, ou
- des tapis comportant une première face apte à reposer sur une surface support et une seconde face formant la surface supérieure d'appui adaptée à l'appui des animaux et comportant les rainures munies chacune d'une ouverture longitudinale supérieure.

De manière générale, les moyens de convoyage comprennent :
- au moins un organe d'entrainement qui est rapporté au sein desdits profilés de guidage, lequel au moins un organe d'entrainement comporte plusieurs surfaces de convoyage qui sont aptes à convoyer les déjections présentes au sein desdits profilés de guidage, et
- des moyens pour la manœuvre dudit au moins un organe d'entraînement au sein desdits profilés de guidage, de sorte que les surfaces de convoyage génèrent ladite circulation de déjections au sein desdits profilés de guidage.

Encore de manière générale, avantageusement, les rainures et les profilés de guidage sont rectilignes et s'étendent parallèlement les uns par rapport aux autres.

Toujours selon une caractéristique de réalisation particulière, les conduits ont chacun :
- une largeur comprise entre 15 et 50 mm et
- une profondeur comprise entre 15 et 50 mm, et
- la largeur entre deux conduits est comprise entre 50 et 500 mm.

La présente invention concerne encore une enceinte d'élevage équipée d'un système de collecte selon l'invention.

De préférence, cette enceinte d'élevage comporte un couloir de circulation comportant un axe longitudinal et recouvert par un revêtement de sol ; et les conduits dudit revêtement de sol sont agencés parallèlement, ou au moins approximativement parallèlement, par rapport audit axe longitudinal.

### DESCRIPTION DETAILLEE DE L'INVENTION

La présente invention sera encore illustrée, sans être aucunement limitée, par la description suivante de différents modes de réalisation particuliers, en relation avec les dessins annexés dans lesquels :
- la figure 1 est une vue générale et en perspective d'un système non couvert par les revendications pour la collecte des
   déjections s'écoulant sur le sol d'une enceinte pour l'élevage des animaux, dont les conduits sont formés par des profilés de guidage rapportés dans des rainures s'ouvrant vers la surface de réception ;
- la figure 2 est une vue partielle et agrandie de la figure 1, montrant en détails la structure du revêtement de sol et des moyens de convoyage associés ;
- la figure 3 est une vue schématique et partielle du revêtement de sol selon les figures 1 et 2, selon un plan de coupe transversal passant par l'un des conduits équipé d'un profilé de guidage comportant une chambre unique ;
- la figure 4 est une vue schématique et partielle du revêtement de sol selon l'invention, selon un plan de coupe transversal passant par l'un des conduits équipé d'un profilé de guidage comportant deux chambres superposées ;
- la figure 5 est une vue générale et en perspective d'une variante de réalisation non couverte par les revendications du
   système de collecte, dans lequel les conduits sont formés par des profilés de guidage rapportés dans des rainures s'ouvrant vers le haut ;
- la figure 6 est une vue générale et en perspective du revêtement de sol selon la figure 5, en l'absence des moyens de convoyage et dont les conduits comprennent des profilés de guidage comportant une chambre unique ;
- la figure 7 est une vue partielle et en perspective d'une variante de réalisation du système de collecte selon l'invention, avec un plan de coupe longitudinal passant par l'un des conduits équipé d'un profilé de guidage comportant deux chambres superposées ;
- la figure 8 est une vue agrandie du système de collecte selon la figure 7, vu depuis l'une des extrémités du conduit.

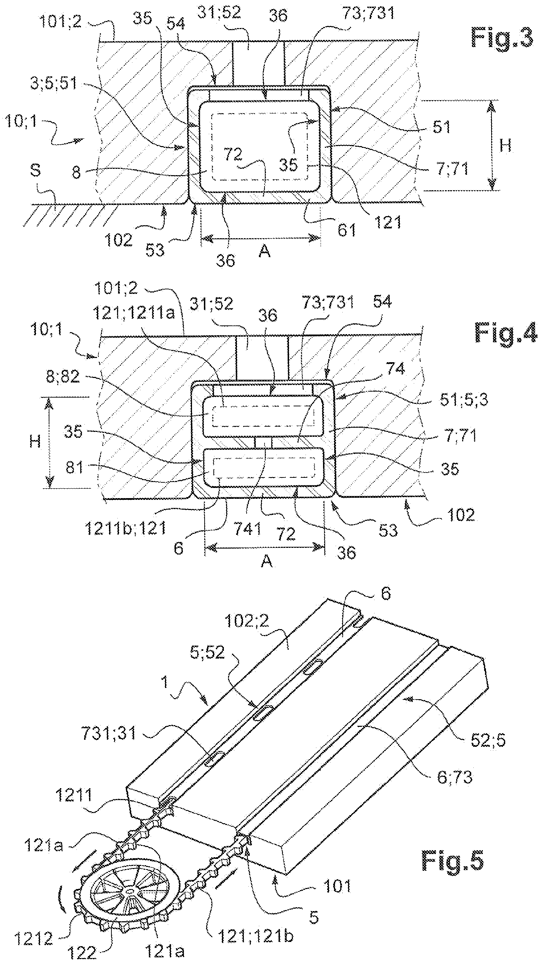

Les systèmes de collecte selon l'invention, représentés sur les figures 4, 7 et 8 sont tout particulièrement adaptés à équiper une enceinte pour l'élevage d'animaux.

Tel que développé ci-après, de tels systèmes de collecte ont pour intérêt de collecter les déjections (en particulier les liquides) s'écoulant sur le sol et de les évacuer, de sorte à offrir une surface supérieure d'appui relativement sèche (ou au moins ne présentant pas une humidité excessive) pour les pieds des animaux, et donc plus saine et plus sécurisante.

Par « animaux », on entend notamment les bovins (en particulier les vaches laitières ou les bovins à viande), les porcins, ou encore tout autre animal d'élevage (ovin, volaille, lapin, cheval, etc.).

Une telle enceinte d'élevage (non représentée) consiste en un bâtiment délimité par un bâti, adapté à l'élevage souhaité (par exemple une étable dans le cas de bovins).

### Revêtement de sol

Le système de collecte selon l'invention comprend tout d'abord un revêtement de sol 1 qui recouvre au moins une partie du sol de cette enceinte d'élevage.

En particulier, le revêtement de sol 1 est avantageusement implanté au niveau des couloirs de circulation C qui sont empruntés par les animaux cheminant entre les différents espaces fonctionnels de l'enceinte d'élevage (par exemple logettes, salles de traite, etc.).

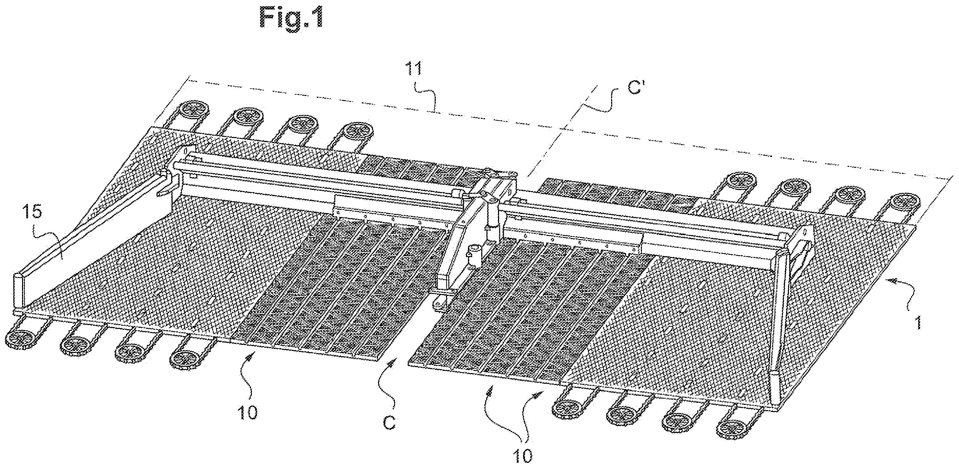

Un couloir de circulation C, illustré très schématiquement sur la figure 1, comporte avantageusement un axe longitudinal C'.

Ce revêtement de sol 1 est avantageusement apte à récupérer les déjections liquides s'écoulant sur le sol et à les séparer par rapport aux matières solides (par exemple les fèces, la paille, etc.), en continu et par gravité.

Pour cela, tel qu'illustré notamment sur les figures 1 à 3, le revêtement de sol 1 correspondant comprend :
- une surface supérieure d'appui 2 sur laquelle les animaux sont destinés à prendre appui, et
- des conduits 3 qui sont ménagés dans ledit revêtement de sol 1 et qui s'ouvrent au niveau de ladite surface supérieure d'appui 2, pour la collecte des déjections (en particulier des déjections liquides).

### Les conduits

Les conduits 3 consistent ici en des structures fermées, de forme générale tubulaire, s'étendant sur toute la longueur du revêtement de sol 1 (notamment du couloir C).

Ces conduits 3 sont aptes à collecter (par gravité) et à contenir les déjections (notamment les liquides) s'écoulant sur le revêtement de sol 1, de sorte que les liquides stagnent le moins possible sur la surface supérieure d'appui 2.

Par « liquides », on entend en particulier les déjections liquides produites par les animaux de l'élevage, en particulier leur urine.

Pour autoriser cet écoulement, chaque conduit 3 comporte au moins une ouverture supérieure 31 s'ouvrant au niveau de la surface supérieure d'appui 2.

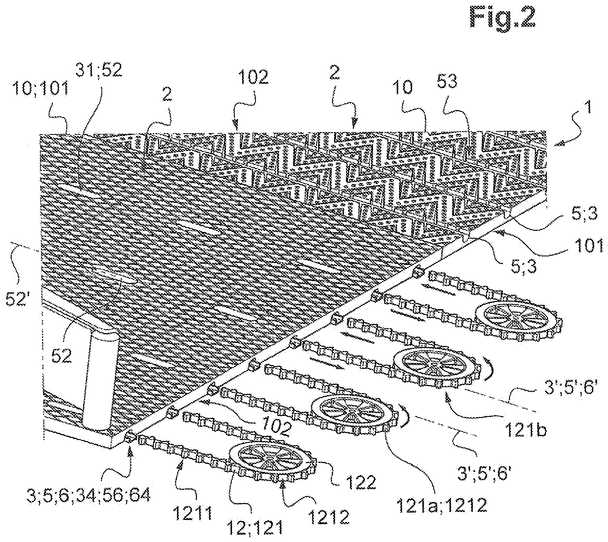

Chaque conduit 3 peut ainsi comporter :
- une unique ouverture supérieure 31, longitudinale et continue, s'étendant sur toute ou partie de la longueur de ce conduit 3 qui présente alors une forme générale de rigole (à droite sur la figure 2), ou
- une pluralité d'ouverture supérieure 31, réparties sur sa longueur (à gauche sur la figure 2).

Chaque conduit 3 est en plus terminée par deux extrémités ouvertes 34 (seule l'une d'elles est visible sur la figure 2), pour autoriser un écoulement et une évacuation des déjections cheminant dans ce conduit 3.

Les conduits 3 ont avantageusement des dimensions particulières pour permettre une collecte efficace des déjections.

A cet égard, comme illustré notamment sur les figures 3 et 4, les conduits 3 sont délimités par une ceinture de surfaces longitudinales définissant deux dimensions : - une largeur A, et - une hauteur H.

En l'espèce, le conduit 3 a avantageusement :
- une largeur A d'au maximum 50 mm, de préférence comprise entre 15 et 50 mm, définie par deux surfaces verticales 35, et
- une hauteur H d'au minimum de 15 mm, avantageusement comprise entre 15 et 50 mm, définie ici par deux surfaces horizontales 36.

Les conduits 3 sont régulièrement espacés les uns par rapport aux autres, sur le revêtement de sol 1. En d'autres termes, ces conduits 3 sont avantageusement régulièrement répartis sur le revêtement de sol 1.

De préférence, tel qu'illustré sur la figure 2, les conduits 3 sont rectilignes et s'étendent parallèlement les uns par rapport aux autres.

Chaque conduit 3 comporte ainsi un axe longitudinal 3', s'étendant parallèlement à l'axe longitudinal 3' des autres conduits 3 (figure 2) et avantageusement parallèlement à l'axe longitudinal C' du couloir C.

Les conduits 3 sont avantageusement répartis sur la largeur du revêtement de sol 1 ; et ces conduits 3 s'étendent sur toute la longueur du revêtement de sol 1 (et avantageusement sur toute la longueur du couloir).

Ces conduits 3 ont de préférence un espacement compris entre 50 et 500 mm, et encore de préférence compris entre 10 et 300 mm.

Tel que développé ci-dessous, selon l'invention, les conduits 3 sont ici formés par :
- des rainures 5 réparties sur le revêtement de sol 1, et
- des profilés de guidage 6 rapportés dans certaines au moins de ces rainures 5.

### Les rainures

Les rainures 5 sont formées ici directement par le revêtement de sol 1, avantageusement avec une section constante sur toutes leurs longueurs.

Chaque rainure 5 est délimitée par deux surfaces latérales 51, définissant sa largeur.

Les deux surfaces latérales 51 de la rainure 5 s'étendent ici parallèlement, ou au moins approximativement parallèlement, l'une par rapport à l'autre.

Chaque rainure 5 comporte encore au moins une ouverture supérieure 52 qui débouche au niveau de la surface supérieure d'appui 2 du revêtement de sol 1, formant une partie de l'ouverture supérieure 31 du conduit 3 correspondant.

Chaque rainure 5 est en plus terminée par deux extrémités ouvertes 56 (seule l'une d'elles est visible sur la figure 2), autorisant un écoulement et une évacuation des déjections.

Les rainures 5 ont avantageusement des dimensions particulières pour permettre le positionnement des profilés de guidage 6 décrits ci-après.

Par exemple, les rainures 5 ont avantageusement :
- une largeur d'au maximum 50 mm, de préférence comprise entre 15 et 50 mm (correspondant à l'écartement des surfaces latérales 51), et
- une hauteur d'au minimum de 15 mm, avantageusement comprise entre 15 et 50 mm (correspondant à la hauteur des surfaces latérales 51).

Les rainures 5 sont régulièrement espacées sur le revêtement de sol 1, les unes par rapport aux autres, pour définir l'agencement des profilés de guidage 6 et des conduits 3 correspondants.

En l'espèce, ces rainures 5 sont avantageusement régulièrement réparties sur le revêtement de sol 1 ; et ces rainures 5 s'étendent sur toute la longueur du revêtement de sol 1.

En outre, tel qu'illustré sur les figures 2 et 5, les rainures 5 sont rectilignes et s'étendent parallèlement les unes par rapport aux autres.

Chaque rainure 5 comporte ainsi un axe longitudinal 5', s'étendant parallèlement à ses surfaces latérales 51 ; les axes longitudinaux 5' des différentes rainures 5 s'étendent parallèlement les uns par rapport aux autres.

Selon une première forme de réalisation illustrée sur les figures 1 à 4, les rainures 5 peuvent comporter chacune plusieurs ouvertures supérieures 52, régulièrement réparties sur leur longueur.

Dans ce cas, comme illustré plus en détails sur les figures 3 et 4, ces rainures 5 comportent avantageusement, d'un côté inférieure, une ouverture longitudinale inférieure 53 continue et, d'un côté supérieure, une surface de dessus 54 dans laquelle débouchent les ouvertures supérieures 52.

L'ouverture inférieure 53 est délimitée par la bordure inférieure des deux surfaces latérales 51.

La surface de dessus 54 consiste en une face plane, s'étendant entre les bordures supérieure des deux surfaces latérales 51.

Chaque ouverture supérieure 52 comporte ainsi deux extrémités (figures 2 et 3) : - une extrémité supérieure, débouchant au niveau de la surface supérieure d'appui 2 du revêtement de sol 1, et - une extrémité inférieure, débouchant au niveau de l'une des rainures 5 et du profilé de guidage 6 associé, au travers de la surface de dessus 54.

Pour une collecte optimale des déjections, chaque ouverture supérieure 52 a une forme allongée, par exemple oblongue.

Chaque ouverture supérieure 52 s'étend sur toute la largeur de la rainure 5 sous-jacente, ou en l'espèce sur une largeur inférieure à celle de la rainure 5 sous-jacente.

Cette ouverture supérieure 52 comporte également un axe longitudinal 52' s'étendant parallèlement à l'axe longitudinal 5' de la rainure 5 associée.

Par exemple, la largeur et la longueur de l'ouverture supérieure 52 sont comprises entre 5 mm et 120 mm, avantageusement entre 5 mm et 30 mm.

La répartition et la densité de ces ouvertures supérieures 52 sont adaptées à façon. Cette répartition et cette densité peuvent en particulier tenir compte de la densité en animaux dans le bâtiment d'élevage.

Selon une seconde forme de réalisation illustrée sur les figures 5 à 8, les rainures 5 peuvent comporter une ouverture supérieure 52 continue, s'étendant sur toute sa longueur et débouchent au niveau de la surface supérieure d'appui 2 du revêtement de sol 1.

Cette ouverture supérieure 52 est délimitée par la bordure supérieure des deux surfaces latérales 51.

Dans ce cas, ces rainures 5 comportent avantageusement une surface de dessous 55 raccordant les deux surfaces latérales 51.

La surface de dessous 55 consiste en une face plane, s'étendant entre les bordures inférieures des deux surfaces latérales 51.

### Surface supérieure souple pour le revêtement de sol

La surface supérieure d'appui 2 du revêtement de sol 1 est avantageusement réalisée dans un matériau apte à subir une déformation élastique.

La surface supérieure d'appui 2 du revêtement de sol 1 est avantageusement adaptée à subir une déformation en enfoncement, cela d'au moins 1 mm, et de préférence comprise entre 1 et 5 mm, lors de l'appui du pied de l'animal ou d'une personne.

Les conduits 3 sont alors avantageusement ménagés sous ladite surface supérieure d'appui 2. Et ladite au moins une ouverture supérieure 31 des conduits 3 s'étend entre ladite surface supérieure d'appui 2 et ledit conduit 3, pour l'écoulement des déjections depuis ladite surface supérieure d'appui 2 jusqu'auxdits conduits 3.

Pour cela, le revêtement de sol 1 peut comprendre :
- un élément mono-matériau formant la surface supérieure d'appui 2 et définissant les rainures 5, ou
- un ensemble multi-matériaux, avec par exemple un premier matériau formant la surface supérieure d'appui 2 et au moins un second matériau définissant les rainures 5.

En l'espèce, la surface supérieure d'appui 2 et les rainures 5 sont avantageusement formées par une bande ou un tapis 10.

La matière du tapis 10 forme ainsi les différentes surfaces des rainures 5, notamment les surfaces latérales 51.

Un tel tapis 10 est avantageusement réalisé dans un matériau choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrènebutadiène), PP (polypropylène) / EPDM (éthylène-propylène-diène monomère), TPU (TPE de polyuréthane).

Ce tapis 10 comporte deux faces opposées 101, 102, dont l'une desdites faces 102 est munie des rainures 5 précitées.

Dans le mode de réalisation des figures 1 à 4 :
- la première face 101 forme la surface supérieure d'appui 2 adaptée à l'appui des animaux, et
- la seconde face 102, munie des rainures 5, est adaptée à reposer sur une surface support S, avantageusement une chape (ou une dalle) en béton, éventuellement armée avec un treillis métallique, ou en bitume.

Dans ce cas, la première face 101 comporte plusieurs ouvertures supérieures 52, participant à former plusieurs ouvertures supérieures 31 de conduits 3 ; la seconde face 102 comporte les rainures 5 pourvues chacune d'une ouverture longitudinale inférieure 53 continue.

Dans le mode de réalisation des figures 5 à 8 :
- la première face 101 est adaptée à reposer sur une surface support S, avantageusement une chape (ou une dalle) en béton, éventuellement armée avec un treillis métallique, ou en bitume, et
- la seconde face 102, munie des rainures 5, forme la surface supérieure d'appui 2 adaptée à l'appui des animaux.

Dans ce cas, la seconde face 102 comporte les rainures 5 pourvues chacune d'une ouverture supérieure 52 continue.

Les tapis 10 selon les figures 1 à 8 sont avantageusement identiques, ou au moins similaires.

Pour cela, les deux faces 101, 102 de ces tapis 10 sont toutes deux adaptées à former la surface supérieure d'appui 2 adaptée à l'appui des animaux et à reposer sur la surface support S.

En d'autres termes, les tapis 10 sont posés dans un sens souhaité, tenant compte de l'orientation recherché pour les rainures 5 (ouvertes longitudinalement vers le haut ou vers le bas).

De manière générale, l'épaisseur de ce tapis 10 est comprise avantageusement entre 20 et 50 mm. Ce tapis 10 a encore par exemple, - une largeur qui est avantageusement comprise entre 300 et 3000 mm, et - une longueur d'au moins 3 m de long.

Un tel tapis 10, avant sa pose, est avantageusement stocké sous forme de plaques, et de préférence encore sous forme de rouleaux.

Cette dernière forme de réalisation en rouleaux a l'intérêt de permettre une pose simple et rapide du revêtement de sol dans l'enceinte d'élevage par déroulement ; elle permet aussi d'assurer une continuité optimale des rainures 5.

Ces plaques ou rouleaux ont avantageusement un bord périphérique droit ou rectiligne, ou une structure d'assemblage (type puzzle) facilitant leur solidarisation par emboitement avec une structure d'assemblage complémentaire.

Un tel tapis 10 peut être fabriqué par assemblage d'un ensemble de pièces superposées, pour former un ensemble du type monobloc, par exemple :
- par vulcanisation d'un ensemble de pièces en matériau élastomère,
- par collage,
- par soudage.

La surface supérieure d'appui 2 du tapis 10 comporte avantageusement un relief pour favoriser l'adhérence (figure 2).

Le relief antidérapant consiste par exemple en un relief monobloc choisi parmi les reliefs utilisés dans les revêtements de sols mis en œuvre de manière classique dans les bâtiments d'élevage, par exemple des éléments saillants en forme de losanges munis de bossages.

Tel qu'illustrée sur les figures 1 et 2, seule une bande latérale du couloir de circulation C comporte un revêtement de sol 1 comprenant des conduits 5 associés aux moyens de convoyage décrits par la suite.

Une partie centrale de ce couloir de circulation C peut alors être recouverte par des tapis 10 qui ont avantageusement une structure identique, ou au moins similaire, à celle décrite ci-dessus en relation avec les figures 1 à 4 (sans les profils de guidage 6).

Ces tapis 10 sont ainsi déposés de manière recto-verso les uns par rapport aux autres.

### Autres formes de réalisation de la surface supérieure du revêtement de sol

Selon un autre mode de réalisation non représenté, le revêtement de sol comprend un ensemble de longerons (ou chevrons) qui sont solidarisés directement avec la surface support S.

Ces longerons sont agencés de manière juxtaposée, tout en préservant des espaces entre eux qui sont destinés à définir les rainures 5 souhaitées.

La surface support S consiste là encore en du béton ou du bitume.

Chaque longeron comprend un ensemble de faces :
- une face inférieure, destinée à reposer sur la surface support S,
- une face supérieure, destinée à former une portion support de la surface supérieure 2 d'appui, et
- deux faces latérales, destinées chacune à former l'une des surfaces latérales 51 d'une rainure 5.

La face de fond des rainures 5 est quant à elle formée par une portion exposée de la surface support S, située entre deux des longerons juxtaposés.

La solidarisation de chaque longeron avec la surface support S est obtenue par exemple par le biais d'une fixation mécanique (pointage, rivetage, etc.) ou d'une fixation chimique (collage notamment).

Selon une troisième forme de réalisation selon l'invention, non représentée, la surface supérieure 2 d'appui est constituée par une chape réalisée en bitume ou en béton, dans laquelle sont ménagées directement les rainures 5.

De telles rainures 5 sont par exemple obtenues - au moyen d'un outil de type matrice, comportant le relief en négatif, appliqué sur le matériau en cours de solidification, ou - par rainurage mécanique d'un sol existant.

### Les profilés de guidage

Certaines au moins des rainures 5 sont destinées à recevoir un profilé de guidage 6 qui vise à assurer une canalisation optimale des déjections et à coopérer avec les moyens de convoyage.

Ces profilés de guidage 6 sont avantageusement destinés à épouser la surface de leurs rainures 5 associées.

Chaque profilé de guidage 6 consiste en une pièce réalisée dans un matériau plastique, par exemple en polychlorure de vinyle ou chlorure de polyvinyle (PVC).

Ce profilé de guidage 6 comporte des parois 7 délimitant au moins une chambre 8 destinée à recevoir les déjections et les moyens de convoyage.

Ces parois 7 ont avantageusement une épaisseur comprise entre 1 et 5 mm.

Les parois 7 de ce profilé de guidage 6 comprennent :
- deux parois latérales 71, verticales, agencées en regard des surfaces latérales 51 de la rainure 5 associée,
- des parois horizontales, l'une inférieure 72 et l'autre supérieure 73.

Les deux parois latérales 71 s'étendent ici parallèlement, ou au moins approximativement parallèlement, l'une par rapport à l'autre.

La paroi inférieure 72 et la paroi supérieure 73 consistent ici toutes deux en une paroi plane, s'étendant entre les deux parois latérales 71.

Les parois latérales 71 et inférieure 72 sont avantageusement pleines de sorte à former une sorte de rigole ou gouttière, étanche au liquide.

La paroi supérieure 73 comporte quant à elle au moins une ouverture supérieure 731 agencée en regard de ladite au moins une ouverture supérieure 52 de la rainure 5 associée, pour participer à former une ouverture supérieure 31 du conduit 3.

Ladite au moins une ouverture supérieure 73 du profilé de guidage 6 participe à l'écoulement des déjections dans ladite au moins une chambre 8 du profilé de guidage 6 depuis la surface supérieure 2 d'appui.

En l'espèce, la paroi supérieure 73 comporte avantageusement plusieurs ouvertures supérieures 731, régulièrement réparties sur sa longueur.

Chaque ouverture supérieure 731 comporte ainsi deux extrémités (visibles figures 2 et 3 notamment) : - une extrémité supérieure, débouchant au niveau de la surface extérieure du profilé de guidage 6, et - une extrémité inférieure, débouchant au niveau de ladite au moins une chambre 8.

Chaque ouverture supérieure 731 a une forme allongée, par exemple oblongue.

Chaque ouverture supérieure 731 s'étend sur tout ou partie de la largeur de la paroi supérieure 73.

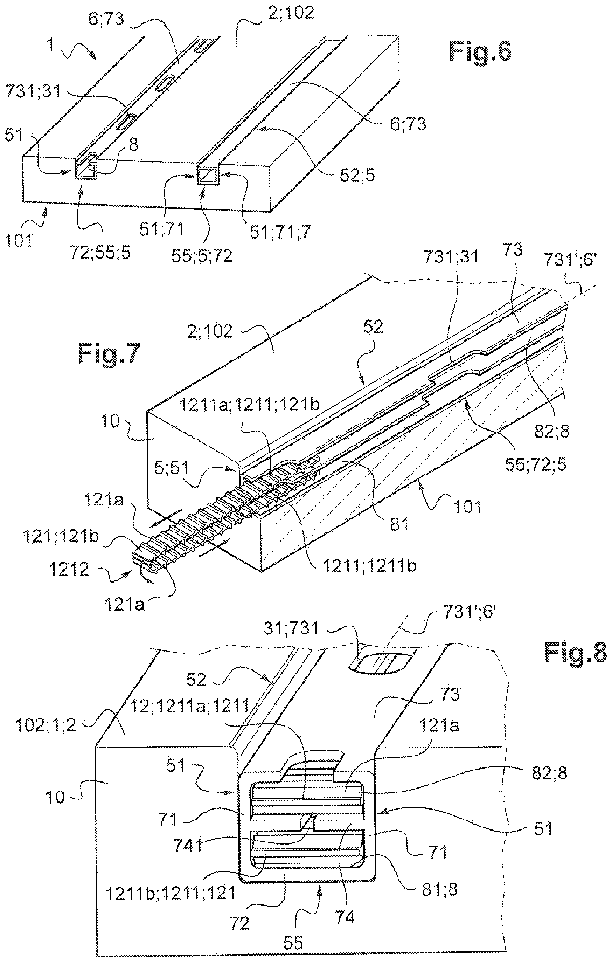

Cette ouverture supérieure 731 comporte un axe longitudinal 731' s'étendant parallèlement à l'axe longitudinal 6' du profilé de guidage 6 (figures 7 et 8).

Par exemple, la largeur et la longueur de l'ouverture supérieure 731 sont comprises entre 5 mm et 120 mm, de préférence entre 5 mm et 30 mm.

La répartition et la densité de ces ouvertures supérieures 731 sont adaptées à façon. Cette répartition et cette densité peuvent en particulier tenir compte de la densité en animaux dans le bâtiment d'élevage.

Selon un premier mode de réalisation représenté sur les figures 3 et 6, le profilé de guidage 6 comporte une chambre 8 unique destinée à recevoir les déjections et les moyens de convoyage.

Cette chambre 8 a une forme générale parallélépipédique, délimitées par la ceinture de parois 7 longitudinales.

Selon un second mode de réalisation représenté sur les figures 4, 7 et 8, le profilé de guidage 6 comporte deux chambres 8 superposées qui sont destinées à recevoir les déjections et les moyens de convoyage.

Pour cela, le profilé de guidage 6 comporte une paroi intermédiaire 74 qui, d'une part, s'étend entre les parois latérales 71 et, d'autre part, est ménagée à distance (avantageusement à égale distance) de la paroi inférieure 72 et de la paroi supérieure 73.

Cette paroi intermédiaire 74 définit ainsi les deux chambres : - une chambre inférieure 81, ménagée entre la paroi inférieure 72 et la paroi intermédiaire 74, et - une chambre supérieure 82, ménagée entre la paroi intermédiaire 74 et la paroi supérieure 73.

Cette paroi intermédiaire 74 comporte plusieurs ouvertures traversantes 741, régulièrement réparties sur sa longueur.

Les ouvertures traversantes 741 de la paroi intermédiaire 74 s'étendent en regard des ouvertures supérieures 731 de la paroi supérieure 73 et en corolaire de ladite au moins une ouverture supérieure 52 de la rainure 5 associée.

Par ailleurs, chaque profilé de guidage 6 est en plus terminée par deux extrémités ouvertes 64 (seule l'une d'elles est visible sur la figure 2), au niveau desquelles débouchent ledit au moins une chambre 8 pour un écoulement et une évacuation des déjections.

En outre, chaque profilé de guidage 6 comporte avantageusement une section correspondant, au jeu près, à celui de sa rainure 5 associée. De préférence encore, le profilé de guidage 6 présente une section en largeur légèrement supérieure à sa rainure 5 associée de sorte à permettre une mise en place à force.

Les profilés de guidage 6 sont avantageusement fixés dans leurs rainures 5 associées, par exemple au moyen de vis rapportées dans le matériau du revêtement de sol ou bien par un système de pièces rapportées (par exemple des brides venant bloquer les profilés de guidage 6 dans leurs rainures 5).

Les profilés de guidage 6 sont éventuellement destinés à être installés lors de la pose en chantier.

Comme illustré sur la figure 3, ladite au moins une chambre 8 de chaque profilé de guidage 6 peut être définie par deux dimensions (figures 3 et 4) :
- une largeur A, correspondant à la distance séparant ses deux parois latérales 71 en regard, et
- une hauteur H, correspondant à la distance séparant ses parois inférieure 72 et supérieure 73.

En l'espèce, ladite au moins une chambre 8 a avantageusement :
- une largeur A d'au maximum 50 mm, de préférence comprise entre 15 et 50 mm, et
- une hauteur H d'au minimum de 15 mm, avantageusement comprise entre 15 et 50 mm.

De plus, dans le cas de rainures 5 débouchantes longitudinalement vers le bas (figures 1 à 4), les profilés de guidage 6 ont avantageusement une cote en hauteur correspondant à la hauteur de la rainure 5 associée.

Le profilé de guidage 6 s'étend ainsi sur toute la hauteur des surfaces latérales 51 de la rainure 5 associée. La paroi inférieure 72 s'étend avantageusement dans le plan de la seconde face 102 inférieure.

Dans le cas de rainures 5 débouchantes longitudinalement vers le haut (figures 5 à 8), les profilés 6 ont avantageusement une cote en hauteur inférieure à la hauteur de la rainure 5 associée

La paroi supérieure 73 est déportée verticalement, vers le bas, par rapport à la surface supérieure d'appui 2 du revêtement de sol 1.

Une telle cote vise à favoriser la collecte des déjections en formant une sorte de rigole dont le fond est défini par la paroi supérieure 73 du profilé de guidage 6 et dont les côtés sont formés par une bande supérieure des surfaces latérales 51 de la rainure 5.

Les profilés de guidage 6 sont régulièrement espacés, les uns par rapport aux autres, sur le revêtement de sol 1. En d'autres termes, ces profilés de guidage 6 sont avantageusement régulièrement répartis sur le revêtement de sol 1 au sein des rainures 5.

De préférence, les profilés de guidage 6 sont rectilignes et s'étendent parallèlement les uns par rapport aux autres.

Chaque profilé de guidage 6 comporte ainsi un axe longitudinal 6', s'étendant parallèlement à ses surfaces latérales 71 et coaxialement à sa rainure 5 associée ; les axes longitudinaux 6' des différents profilés de guidage 6 s'étendent parallèlement les uns aux autres.

Les profilés de guidage 6 sont répartis sur la largeur du revêtement de sol 1 ; et ces profilés de guidage 6 s'étendent sur toute la longueur du revêtement de sol 1 et le cas échéant parallèlement par rapport à l'axe longitudinal C' du couloir C équipé.

### Moyens de collecte

Les moyens de collecte 11 comprennent en particulier une fosse ou un canal de reprise (représentés très schématiquement sur la figure 1).

Ces moyens de collecte 11 sont installés au niveau de l'une au moins des deux extrémités ouvertes 34 des conduits 3 du revêtement de sol 1.

Une pente est avantageusement appliquée au revêtement de sol 1 (et en particulier à ses conduits 3), pour favoriser l'écoulement des fluides collectés en direction des moyens de collecte 11, à savoir la fosse (ou canal de reprise).

### Moyens pour convoyer les déjections

De manière à générer une circulation optimale des déjections liquides en direction de ces moyens de collecte 11, et éventuellement des déjections solides, le système de collecte selon l'invention comprend encore des moyens 12 pour convoyer les liquides (et éventuellement des déjections solides) le long des conduits 3 du revêtement de sol 1.

En l'espèce, ces moyens de convoyage 12 comprennent pour cela des organes d'entrainement 121 qui sont rapportés dans les conduits 3 et qui sont accouplés avec des moyens de manœuvre 122 pour leur appliquer un mouvement destiné à provoquer le déplacement des déjections dans un sens adapté au sein de ces conduits 3.

Les organes d'entrainement 121 consistent avantageusement en des bandes ou courroies, sans fin, qui sont rapportées dans et le long des chambres 8 des profilés de guidage 6.

Ces organes d'entrainement 121 sont représentés partiellement et schématiquement sur les figures 1 à 8 dans un souci de simplification. Toutefois, en pratique, ces organes d'entrainement 121 sont avantageusement destinés à s'étendre sur toute la longueur des profilés de guidage 6 associés.

Ces organes d'entrainement 121 comportent des surfaces de convoyage 121a formant des sortes de rabots ou de racleurs, aptes à pousser/repousser/tirer les déjections présentes au sein des profilés de guidage 6 associés.

Ces organes d'entrainement 121 comportent en l'espèce des plots 121a formant les surfaces de convoyage, répartis sur deux faces opposées 121b.

Ces plots 121a s'étendent perpendiculairement à l'axe longitudinal de l'organe d'entrainement 121.

De préférence, ces organes d'entrainement 121 sont réalisés monoblocs, dans un matériau élastomère, à savoir par exemple le caoutchouc naturel, le caoutchouc « naturel synthétique » (ou poly-isoprène synthétique), le polybutadiène ou le styrène - butadiène.

Ce matériau des organes d'entrainement 121 participe à limiter les frottements avec les profilés de guidage 6.

Les organes d'entrainement 121 présentent avantageusement :
- une largeur correspondant, au jeu près, à la largeur A de la chambre 8 associée, ou légèrement inférieure à cette dernière (par exemple compris entre 90 % et 100 % par rapport à la largeur A de cette chambre 8), et
- une hauteur inférieure à la hauteur de la chambre 8 associée (par exemple compris entre 90 % et 100 % par rapport à la hauteur de cette chambre 8).

Les organes d'entrainement 121 comportent des brins actifs 1211 qui s'étendent chacun au sein de l'un des conduits 3, et plus précisément au sein et le long d'une chambre 8 desdits profilés de guidage 6.

Ces brins actifs 1211 sont raccordés par des brins de jonction 1212 s'étendant entre deux des brins actifs 1211 successifs (figures 2 et 7 notamment).

Les moyens de manœuvre 122 assurent une manœuvre en translation des organes d'entraînement 121 au sein de leurs chambres 8 respectives, de sorte à générer une circulation des déjections au sein des profilés de guidage 6 associé.

Lors de cette manœuvre en translation, les forces de frottement sont avantageusement réduites notamment du fait des propriétés des profilés de guidage 6.

Dans ce cas, les moyens de manœuvre 122 comprennent avantageusement un ensemble de poulies coopérant chacune avec l'un des brins de jonction 1212 pour leur guidage entre deux profilés de guidage 6.

Selon un premier mode de réalisation, non couvert par les revendications, les poulies 122 sont agencées de sorte que les organes d'entrainement 121 forment un ensemble d'aller-retour au sein des profilés de guidage 6 successifs, pour présenter une forme générale de S (figures 1 à 3).

Selon un second mode de réalisation, couvert par les revendications, les poulies 122 sont agencées de sorte que les organes d'entrainement 121 forment un aller-retour au sein d'un seul et même conduit 3 (figures 4, 7 et 8).

Dans ce second mode de réalisation, l'organe d'entrainement 121 comporte avantageusement deux brins actifs 1211 superposées dans le conduit 3 :
- un brin supérieur 1211a, formant partie supérieure apte à servir de support aux déjections solides tout en autorisant l'écoulement des déjections liquides, et
- un brin inférieur 1211b, formant une partie inférieure apte à convoyer les déjections liquides s'écoulant depuis ladite partie supérieure 1211a.

Une telle forme de réalisation vise à favoriser une évacuation, d'une part, des déjections solides au niveau d'une première extrémité 34 du conduit 3 et, d'autre part, des déjections liquides au niveau d'une seconde extrémité 34 de ce conduit 3.

Cette forme de réalisation équipe un profilé de guidage 6 comportant deux chambres 8 superposées (tel que représenté sur les figures 4, 7 et 8). Toutefois, dans un mode de réalisation non couvert par les revendications, cette forme de réalisation peut équiper un profilé de guidage 6 comportant une unique chambre 8.

Dans les différents modes de réalisation, l'une au moins des poulies 122 est motorisée pour assurer le cheminement des organes d'entrainement 121.

La vitesse de cheminement est par exemple comprise entre 1 et 10 m/min, notamment suivant la concentration en animaux au m² et le type de déjection.

Deux brins actifs 1211 successifs cheminent ainsi dans des sens inverses l'un par rapport à l'autre.

### Exemples de réalisation

Les figures 1 à 3, 5 et 6 portent sur des premiers exemples de réalisation non couverts par les revendications, dans lesquels les profilés de guidage 6 comportent une chambre 8 unique.

Les profilés de guidage 6 peuvent être rapportés dans des rainures 5 s'ouvrant longitudinalement vers le bas (figures 1 à 3) ou dans des rainures 5 s'ouvrant longitudinalement vers le haut (figures 5 et 6).

Les organes d'entrainement 121 sont avantageusement destinés à cheminer successivement sur la longueur de chacun des profilés de guidage 6 du revêtement de sol 1, depuis un profilé de guidage 6 amont (à gauche sur la figure 2) jusqu'à un profilé de guidage 6 aval (à droite sur la figure 2), avant de revenir au profilé de guidage 6 amont précitée.

Les déjections sont ainsi évacuées alternativement au niveau de l'une des deux extrémités ouvertes 64 des profilés de guidage 6, en regard desquels est ménagé une fosse ou un canal de reprise.

Dans chaque profilé de guidage 6, le liquide est mis en circulation dans un sens identique au sens de cheminement des organes d'entrainement 121.

Pour cela, les deux faces opposées 121b des organes d'entrainement 121 sont agencées verticalement ; les plots 121a sont en saillie horizontalement.

Les figures 4, 7 et 8 concernent des seconds exemples de réalisation, couverts par les revendications, dans lesquels les profilés de guidage 6 comportent deux chambres 8 superposées.

Les profilés de guidage 6 peuvent là encore être rapportés dans des rainures 5 s'ouvrant longitudinalement vers le bas (figure 4) ou dans des rainures 5 s'ouvrant longitudinalement vers le haut (figures 7 et 8).

Les organes d'entraînement 121 comportent alors deux brins actifs 1211 qui sont agencés de manière superposée au sein d'un même profilé de guidage 6.

Dans ce cas, les brins actifs 1211 comprennent :
- le brin actif 1211a supérieur, cheminant dans la chambre supérieure 82 du profilé de guidage 6 et formant une partie supérieure apte à servir de support aux déjections solides tout en autorisant l'écoulement des déjections liquides, et
- le brin actif 1211b inférieur, cheminant dans la chambre supérieure inférieure 81, formant une partie inférieure apte à convoyer les déjections liquides s'écoulant depuis la chambre supérieure 82.

Le brin actif 1211a supérieur et le brin actif 1211b inférieur sont ainsi destinés à cheminer respectivement dans les chambres supérieure 82 et inférieure 81, dans des sens inverses l'un par rapport à l'autre.

Pour une séparation optimale, la bande sans fin 1211 comporte une largeur supérieure, d'une part, à la largeur des ouvertures traversantes 741 de la paroi intermédiaire 74 et, d'autre part, à la largeur de l'ouverture supérieure 31 du conduit 3.

De plus, les deux faces opposées 121b des organes d'entrainement 121 sont agencées horizontalement ; les plots 121a sont en saillie verticalement.

### Moyens d'alimentation en liquide de traitement

De manière générale, pour une hygiène efficace et une évacuation optimale des déjections, le système de collecte comporte encore avantageusement des moyens pour une alimentation des conduits 3 avec un liquide de traitement (non représentés).

Ces moyens d'alimentation consistent avantageusement en des moyens permettant un écoulement du liquide de traitement directement dans les conduits 3, par exemple un dispositif du type goutte à goutte.

Ces moyes d'alimentation sont alors avantageusement implantés d'un côté amont des conduits 3 (à proximité de l'une au moins de ses extrémités ouvertes 34), tenant compte du sens de cheminement des déjections.

Le liquide de traitement contient par exemple des bactéries d'intérêt et/ou un agent de désinfection.

### Moyens de raclage

De préférence, cette installation de collecte comporte encore des moyens 15 pour le raclage de la surface supérieure d'appui 2 (représentés schématiquement sur la figure 1).

Ces moyens de raclage 15 consistent par exemple en un rabot dont la bordure inférieure repose sur la surface supérieure d'appui 2.

Ce rabot est destiné à être manœuvré en translation sur la longueur du revêtement de sol 1 pour repousser les matières solides (fèces, paille, etc.) présentes sur la surface supérieure d'appui 2, jusqu'aux moyens de collecte 11.

Ces moyens de raclage 15 peuvent être choisis parmi les moyens classiques en soi et connus de l'homme du métier.

Le cas échéant, ces moyens de raclage 15 comportent des dents aptes à racler les conduits 3 qui s'ouvrent vers le haut et dont l'ouverture longitudinale est libre.

### Mise en œuvre

En fonctionnement, le revêtement de sol 1 est susceptible de recevoir différentes matières organiques, notamment des déjections (urine, fèces).

La surface supérieure d'appui 2 du revêtement de sol 1 peut être recouverte de paille.

Le revêtement de sol 1 permet alors un écoulement des déjections au travers des ouvertures supérieures 31, jusqu'aux conduits 3 (et plus précisément jusqu'aux profilés de guidage 6), évitant ainsi l'accumulation de ces liquides sur la surface supérieure d'appui 2 qui reste ainsi relativement sèche.

Les matières solides, notamment les fèces et la paille, demeurent sur la surface supérieure d'appui 2, de sorte à éviter ou au moins limiter leurs mélanges avec les matières liquides pour limiter la production d'ammoniac au sein de l'enceinte d'élevage et aussi de sorte à éviter que des matières solides viennent s'accrocher avec les moyens de convoyage 12 pour conserver une action optimale sur la mise en circulation des déjections au sein des conduits 3.

Lors d'un nettoyage de ce revêtement de sol 1, le liquide de nettoyage va également s'écouler dans ces conduits 3, évitant que la surface supérieure d'appui 2 reste mouillée de manière excessive.

Ce phénomène permet par conséquent aux animaux de cheminer sur une surface relativement saine, avec un risque de chute réduit et sans humidification de leurs pieds.

L'ensemble des déjections s'écoulant dans les conduits 3 est alors efficacement évacué vers les moyens de collecte 11 (notamment la fosse ou le canal de reprise) par la mise en œuvre des moyens de convoyage 12 décrits ci-dessus.

Comme évoqué, les organes d'entrainement 121 sont mis en mouvement (en sens unique) au sein des profilés de guidage 6, de sorte à générer le cheminement des déjections vers les moyens de collecte 11 dédiés.

Les profilés de guidage 6 ont l'intérêt de canaliser efficacement ces déjections et de réduire les efforts de frottement exercés sur les moyens de convoyage 12.

Les moyens de convoyage 12 permettent ainsi une circulation et une évacuation active des déjections contenus dans les conduits 3, pour éviter leur stagnation et pour limiter le développement d'ammoniac et de microorganismes dans l'enceinte d'élevage.

De manière générale, les moyens de convoyage 12 décrits ci-dessus peuvent être adaptés à façon au sein de l'un quelconque des revêtements de sol 1 constitutifs du système de collecte selon l'invention.

Encore de manière générale, le revêtement de sol 1 selon l'invention permet une évacuation rapide et en continu des déjections par rapport à la surface supérieure d'appui 2 et par rapport à l'enceinte d'élevage, ce qui permet un maintien efficace de cette dernière à l'état sec (ou au moins sans excès d'humidité), limitant ainsi les problèmes d'hygiène rencontrés avec les revêtements de sol habituels.

Le revêtement de sol 1 selon l'invention permet également une certaine séparation des liquides qui s'écoulent dans les conduits 3, par rapport aux fèces et à la paille qui restent principalement sur la surface supérieure d'appui 2, de sorte à éviter leur mélange et à limiter la production d'ammoniac au sein de l'enceinte d'élevage.

## Revendications

1. Système pour la collecte des déjections s'écoulant sur le sol d'une enceinte pour l'élevage d'animaux, par exemple de bovins,
lequel système comprend :
(i) un revêtement de sol (1), comprenant :
- une surface supérieure d'appui (2) sur laquelle les animaux sont destinés à prendre appui, et
- des conduits (3) qui sont ménagés dans ledit revêtement de sol (1) et qui s'ouvrent au niveau de ladite surface supérieure d'appui (2), pour permettre l'écoulement desdites déjections,
lesquels conduits (3) sont formés par, d'une part, des rainures (5) réparties sur ledit revêtement de sol (1) et, d'autre part, au moins un profilé de guidage (6) rapporté dans l'une au moins desdites rainures (5),
lesquelles rainures (5) comportent chacune au moins une ouverture supérieure (52) qui débouche au niveau de ladite surface supérieure d'appui (2),
lequel au moins un profilé de guidage (6), destiné à recevoir lesdites déjections, comporte au moins une ouverture supérieure (731) agencée en regard de ladite au moins une ouverture supérieure (52) de la rainure (5) associée, pour permettre l'écoulement des déjections dans ledit profilé de guidage (6) depuis ladite surface supérieure d'appui (2),
(ii) des moyens (11) pour la collecte des déjections circulant le long dudit au moins un profilé de guidage (6), et
(iii) des moyens (12) pour convoyer les déjections au sein desdits profilés de guidage (6), de manière à générer une circulation desdites déjections le long desdits profilés de guidage (6) et en direction desdits moyens de collecte (11),
**caractérisé en ce que** chaque rainure (5) est délimitée par deux surfaces latérales (51), définissant sa largeur,
**en ce que** chaque rainure (5) est en plus terminée par deux extrémités ouvertes (56) autorisant un écoulement et une évacuation des déjections,
**en ce que** chaque profilé de guidage (6) consiste en une pièce réalisée dans un matériau plastique,
lequel profilé de guidage (6) comporte des parois (7) délimitant deux chambres (8) superposées qui sont destinées à recevoir les déjections et les moyens de convoyage (12),
lesquelles parois (7) de ce profilé de guidage (6) comprennent :
- deux parois latérales (71), verticales, agencées en regard des surfaces latérales (51) de la rainure (5) associée,
- des parois horizontales, l'une inférieure (72) et l'autre supérieure (73),
- une paroi intermédiaire (74), pour définir une chambre inférieure (81) et une chambre supérieure (82) dans lesquelles cheminent les moyens de convoyage (12),
laquelle paroi intermédiaire (74) s'étend entre les parois latérales (71) et est ménagée à distance desdites parois inférieure (72) et supérieure (73),
laquelle paroi intermédiaire (74) comporte au moins une ouverture traversante (741),
laquelle paroi supérieure (73) comporte ladite au moins une ouverture supérieure (731),
lesquels moyens de convoyage (12) comprennent :
- au moins un organe d'entrainement (121) qui est rapporté au sein desdits profilés de guidage (6), lequel au moins un organe d'entrainement (121) comporte plusieurs surfaces de convoyage (121a) qui sont aptes à convoyer les déjections présentes au sein desdits profilés de guidage (6), et
- des moyens (122) pour la manœuvre dudit au moins un organe d'entraînement (121) au sein desdits profilés de guidage (6), de sorte que les surfaces de convoyage (121a) génèrent ladite circulation de déjections au sein desdits profilés de guidage (6),
lequel au moins un organe d'entrainement (121) consiste en une bande sans fin comportant deux parties superposées dans l'un desdits profilés de guidage (6) :
- une partie supérieure (1211a), formant un brin supérieur, destinée à cheminer dans ladite chambre supérieure (82), apte à servir de support aux déjections solides tout en autorisant l'écoulement des déjections liquides, et
- une partie inférieure (1211b), formant un brin inférieur, destinée à cheminer dans ladite chambre inférieure (81), apte à convoyer les déjections liquides s'écoulant depuis ladite partie supérieure (1211a).

2. Système selon la revendication 1, **caractérisé en ce que** ladite au moins une ouverture traversante (741) de la paroi intermédiaire (74) s'étend en regard de ladite au moins une ouverture supérieure (731) du profilé de guidage (6) et de ladite au moins une ouverture supérieure (52) de la rainure associée (5),
et **en ce que** la bande sans fin comporte une largeur supérieure, d'une part, à la largeur de ladite au moins une ouverture traversante (741) de la paroi intermédiaire (74) et, d'autre part, à la largeur de ladite au moins une ouverture supérieure (731) du profilé de guidage (6) et/ou de ladite au moins une ouverture supérieure (52) de la rainure associée (5).

3. Système selon l'une quelconque des revendications 1 ou 2, **caractérisé en ce que** les moyens de manœuvre (122) comprennent des poulies (122) qui sont agencées de sorte que les organes d'entrainement (121) forment un aller-retour au sein d'un seul et même conduit (3),
lequel brin (1211a) supérieur et lequel brin (1211b) inférieur sont ainsi destinés à cheminer respectivement dans les chambres supérieure (82) et inférieure (81), dans des sens inverses l'un par rapport à l'autre.

4. Système selon l'une quelconque des revendications 1 à 3, **caractérisé en ce que** ladite au moins une bande sans fin comportant deux faces opposées dont l'une au moins est munie de plots formant des surfaces de convoyage.

5. Système selon la revendication 4, en combinaison avec les revendications 2 et 3, **caractérisé en ce que** les deux faces opposées (121b) des organes d'entrainement (121) sont agencées horizontalement et **en ce que** les plots (121a) sont en saillie verticalement.

6. Système selon l'une quelconque des revendications 1 à 5, **caractérisé en ce que** le revêtement de sol (1) comprend une surface supérieure d'appui (2) réalisée dans un matériau apte à subir une déformation élastique,
**en ce que** les conduits (3) sont ménagés sous ladite surface supérieure d'appui (2),
et **en ce que** ladite au moins une ouverture supérieure (31) dudit au moins un conduit (3) s'étend entre ladite surface supérieure d'appui (2) et ledit conduit (3), pour l'écoulement des déjections depuis ladite surface supérieure d'appui (2) jusqu'auxdits conduits (3).

7. Système selon la revendication 6, **caractérisé en ce que** le revêtement de sol (1) comporte au moins un tapis (10) comportant une première face (101) et une seconde face (102) dont :
- une première face (101) forme la surface supérieure d'appui (2) adaptée à l'appui des animaux, et
- une seconde face (102), apte à reposer sur une surface support,
**en ce que** l'une au moins desdites faces (102) comporte les rainures (5) munies chacune d'une ouverture longitudinale (53),
et **en ce que** les ouvertures supérieures (52) des rainures (5) sont ménagées au sein dudit tapis (10).

8. Système selon la revendication 7, **caractérisé en ce que** la seconde face (102), apte à reposer sur une surface support, comporte les rainures (5) munies chacune d'une ouverture longitudinale inférieure (53).

9. Système selon l'une quelconque des revendications 1 à 5, **caractérisé en ce que** les rainures (5) comportent une ouverture longitudinale supérieure (52), débouchant au niveau de la surface supérieure d'appui (2).

10. Système selon la revendication 9, **caractérisé en ce que** le revêtement de sol (1) comprend une chape réalisée en bitume ou en béton, dans laquelle sont ménagées lesdites rainures (5).

11. Système selon la revendication 10, **caractérisé en ce que** le revêtement de sol (1) comprend un ensemble de longerons qui sont solidarisés avec une surface support (S), cela de manière juxtaposée et tout en préservant un espacement définissant lesdites rainures (5).

12. Système selon la revendication 9, **caractérisé en ce que** le revêtement de sol (1) comprend des tapis (10) comportant :
- une première face (101) apte à reposer sur une surface support (S), et
- une seconde face (102) formant la surface supérieure d'appui (2) adaptée à l'appui des animaux et comportant les rainures (5) munies chacune d'une ouverture longitudinale supérieure (52).

13. Enceinte d'élevage équipée d'un système de collecte selon l'une quelconque des revendications 1 à 12.

14. Enceinte d'élevage selon la revendication 13, **caractérisée en ce qu'**elle comporte un couloir de circulation (C) comportant un axe longitudinal (C') et recouvert par un revêtement de sol (1), et **en ce que** les conduits (3) dudit revêtement de sol (1) sont agencés parallèlement, ou au moins approximativement parallèlement, par rapport audit axe longitudinal (C').

## Patentansprüche

1. System zum Auffangen von am Boden fließenden Ausscheidungen in einem Gebäude für die Aufzucht von Tieren, zum Beispiel von Rindern,
wobei das System
(i) einen Bodenbelag (1) mit
einer oberen Auflagefläche (2), auf der die Tiere aufliegen sollen, und Leitungen (3), die im Bodenbelag (1) angeordnet sind und die an der oberen Auflagefläche (2) offen sind, um ein Abfließen der besagten Ausscheidungen zu ermöglichen,
wobei die Leitungen (3) einerseits durch über den Bodenbelag (1) verteilte Rinnen (5) und andererseits durch mindestens ein in mindestens einer der Rinnen (5) eingebrachtes Führungsprofil (6) gebildet sind,
wobei die Rinnen (5) jeweils mindestens eine obere Öffnung (52), die an der oberen Auflagefläche (2) mündet, aufweisen,
wobei das mindestens eine Führungsprofil (6), das dazu bestimmt ist, die Ausscheidungen aufzunehmen, mindestens eine obere Öffnung (731) aufweist, die gegenüber der mindestens einen oberen Öffnung (52) der zugehörigen Rinne (5) angeordnet ist, um das Abfließen der Ausscheidungen in dem Führungsprofil (6) von der oberen Auflagefläche (2) her zu ermöglichen,
(ii) Mittel (11) zum Auffangen der entlang des mindestens einen Führungsprofils (6) fließenden Ausscheidungen und
(iii) Mittel (12) zum Transportieren der Ausscheidungen in den Führungsprofilen (6), um ein Fließen der Ausscheidungen entlang der Führungsprofile (6) und zu den Sammelmitteln (11) hin zu erzeugen,
aufweist,
**dadurch gekennzeichnet, daß** jede Rinne (5) durch zwei Seitenflächen (51) begrenzt ist, die deren Breite definieren,
daß jede Rinne (5) außerdem an den Enden an zwei Öffnungen (56) endet, die ein Abfließen und einen Abtransport der Ausscheidungen ermöglichen,
daß jedes Führungsprofil (6) aus einem aus einem Kunststoffmaterial gefertigtem Stück besteht,
wobei das Führungsprofil (6) Wandungen (7) aufweist, die zwei übereinander liegende Kammern (8) begrenzt, die dazu bestimmt sind, die Ausscheidungen und die Transportmittel (12) aufzunehmen,
wobei die Wandungen (7) des Führungsprofils (6)
- zwei senkrechte, gegenüber den Seitenflächen (51) der zugehörigen Rinne (5) angeordnete seitliche Wandungen (71),
- horizontale Wandungen, eine untere (72) und eine obere (73),
- eine Zwischenwandung (74) zum Definieren einer unteren Kammer (81) und einer oberen Kammer (82), in denen sich die Transportmittel (12) bewegen, aufweisen,
wobei sich die Zwischenwandung (74) zwischen den seitlichen Wandungen (71) erstreckt und in einem Abstand zu der unteren (72) und zu der oberen (73) Wandung angeordnet ist,
wobei die Zwischenwandung (74) mindestens eine Durchgangsöffnung (741) aufweist,
wobei die obere Wandung (73) die mindestens eine obere Öffnung (731) aufweist, wobei die Transportmittel (12)
- mindestens ein Antriebsorgan (121), das in den Führungsprofilen (6) angeordnet ist, wobei das mindestens eine Antriebsorgan (121) mehrere Transportflächen (121a) aufweist, die dazu ausgelegt sind, die in den Führungsprofilen (6) vorhandenen Ausscheidungen zu transportieren, und
- Mittel (122) zum Bedienen des mindestens einen Antriebsorgans (121) in den Führungsprofilen (6), so daß die Transportflächen (121a) das Abfließen der Ausscheidungen in den Führungsprofilen (6) erzeugen,
aufweisen,
wobei das mindestens eine Antriebsorgan (121) aus einem Endlosband besteht, das zwei in einem der Führungsprofile (6) übereinander angeordnete Teile aufweist:
- einen oberen Teil (1211a), der einen oberen Zug bildet, der dazu bestimmt ist, sich in der oberen Kammer (82) zu bewegen, und dazu ausgelegt ist, als Unterlage für die festen Abscheidungen zu dienen, und dabei das Abfließen der flüssigen Ausscheidungen ermöglicht, und
- einen unteren Teil (1211b), der einen unteren Zug bildet, der dazu bestimmt ist, sich in der unteren Kammer (81) zu bewegen, und dazu ausgelegt ist, die von dem oberen Teil (1211a) her fließenden flüssigen Ausscheidungen zu transportieren.

2. System gemäß Anspruch 1, **dadurch gekennzeichnet, daß** sich die mindestens eine Durchgangsöffnung (741) der Zwischenwandung (74) gegenüber der mindestens einen oberen Öffnung (731) des Führungsprofils (6) und der mindestens einen oberen Öffnung (52) der zugehörigen Rinne (5) erstreckt
und daß das Endlosband eine Breite aufweist, die einerseits größer als die Breite der mindestens einen Durchgangsöffnung (741) der Zwischenwandung (74) ist und andererseits größer als die Breite der mindestens einen oberen Öffnung (731) des Führungsprofils (6) und/oder der mindestens einen oberen Öffnung (52) der zugehörigen Rinne (5) ist.

3. System gemäß einem der Ansprüche 1 oder 2, **dadurch gekennzeichnet, daß** die Bedienungsmittel (122) Umlenkrollen (122) aufweisen, die so angeordnet sind, daß die Antriebsorgane (121) einen Hin- und Rückweg in ein und derselben Leitung (3) bilden,
wobei das obere Trum (1211a) und das untere Trum (1211b) somit dazu bestimmt sind, sich in den oberen Kammern (82) und den unteren Kammern (81) in zueinander entgegengesetzten Richtungen zu bewegen.

4. System gemäß einem der Ansprüche 1 bis 3, **dadurch gekennzeichnet, daß** das mindestens eine Endlosband zwei voneinander abgewandte Seiten aufweist, von denen mindestens eine mit Bolzen bestückt ist, die Transportflächen bilden.

5. System gemäß Anspruch 4 kombiniert mit den Ansprüchen 2 und 3, **dadurch gekennzeichnet, daß** die beiden voneinander angewandten Seiten (121b) der Antriebsorgane (121) horizontal angeordnet sind und daß die Bolzen (121a) senkrecht vorstehen.

6. System gemäß einem der Ansprüche 1 bis 5, **dadurch gekennzeichnet, daß** der Bodenbelag (1) eine obere Auflagefläche (2) aufweist, die aus einem Material gefertigt ist, das dazu ausgelegt ist, einer elastischen Verformung unterzogen werden zu können,
daß die Leitungen (3) unter der oberen Auflagefläche (2) angeordnet sind,
und daß sich die mindestens eine obere Öffnung (31) der mindestens einen Leitung (3) für das Abfließen der Ausscheidungen von der oberen Auflagefläche (2) bis zu den Leitungen (3) zwischen der oberen Auflagefläche (2) und der Leitung (3) erstreckt.

7. System gemäß Anspruch 6, **dadurch gekennzeichnet, daß** der Bodenbelag (1) mindestens einen Teppich (10) mit einer ersten Seite (101) und einer zweiten Seite (102) aufweist, von denen
- eine erste Seite (101) die obere Auflagefläche (2) bildet, die für das Aufliegen der Tiere ausgelegt ist, und
- eine zweite Seite (102) dazu ausgelegt ist, auf einer Stützfläche aufzuliegen, daß mindestens eine (102) der Seiten die Rinnen (5) aufweist, die jeweils mit einer länglichen Öffnung (53) versehen sind,
und daß die oberen Öffnungen (52) der Rinnen (5) in dem Teppich (10) eingerichtet sind.

8. System gemäß Anspruch 7, **dadurch gekennzeichnet, daß** die zweite Seite (102), die dazu ausgelegt ist, auf einer Stützfläche aufzuliegen, die Rinnen (5) aufweist, von denen jede mit einer unteren länglichen Öffnung (53) versehen ist.

9. System gemäß einem der Ansprüche 1 bis 5, **dadurch gekennzeichnet, daß** die Rinnen (5) eine obere längliche Öffnung (52) aufweisen, die an der oberen Auflagefläche (2) mündet.

10. System gemäß Anspruch 9, **dadurch gekennzeichnet, daß** der Bodenbelag (1) einen aus Bitumen oder aus Beton gefertigten Unterboden aufweist, in den die Rinnen (5) eingebracht sind.

11. System gemäß Anspruch 10, **dadurch gekennzeichnet, daß** der Bodenbelag (1) eine Gesamtheit von Längsträgern aufweist, die mit einer Stützfläche (S) verbunden sind und die dabei nebeneinander liegen und einen die Rinnen (5) definierenden Abstand bewahren.

12. System gemäß Anspruch 9, **dadurch gekennzeichnet, daß** der Bodenbelag (1) Teppiche (10) aufweist, die
- eine erste Seite (101), die dazu ausgelegt ist, auf einer Stützfläche (S) aufzuliegen, und
- eine zweite Seite (102), die die für das Aufliegen der Tiere ausgelegte obere Auflagefläche (2) bildet und die Rinnen (5) aufweist, von denen jede mit einer oberen länglichen Öffnung (52) versehen ist, aufweisen.

13. Aufzuchtgebäude, das mit einem System gemäß einem der Ansprüche 1 bis 12 ausgestattet ist.

14. Aufzuchtgebäude gemäß Anspruch 13, **dadurch gekennzeichnet, daß** es einen Abflußkanal (C) aufweist, der eine Längsachse (C') hat und mit einem Bodenbelag (1) bedeckt ist, und daß die Leitungen (3) des Bodenbelags (1) parallel oder im Wesentlichen parallel zur Längsachse (C') angeordnet sind.

## Claims

1. System for collecting the excrements on the floor of an enclosed structure for raising animals, for example cattle,
which system is **characterised in that** it comprises:
(i) a floor cover (1), comprising:
- an upper load-bearing surface (2) on which animals are intended to be supported, and
- ducts (3) which are located in said floor cover (1) and which open at said upper load-bearing surface (2), to allow said excrements to run,
which ducts (3) comprise, on the one hand, grooves (5) distributed across said floor cover (1) and, on the other hand, at least one guiding profile (6) inserted into at least one of said grooves (5),
which grooves (5) each comprise at least one upper opening (52) which leads at said upper load-bearing surface (2),
which at least one guiding profile (6), intended to receive said excrements, comprises at least one upper opening (731) arranged opposite said at least one upper opening (52) of the associated groove (5), to allow the excrements to run into said guiding profile (6) from said upper load-bearing surface (2),
(ii) collection means (11), for collecting the excrements circulating along said at least one guiding profile (6), and
(iii) conveying means (12), for conveying the excrements within said guiding profiles (6), so as to move said excrements along said guiding profiles (6) and in the direction of said collection means (11),
**characterised in that** each groove (5) is delimited by two side surfaces (51), defining the width thereof,
wherein each groove (5) is further ended by two open ends (56), enabling a run and a removal of the excrements,
wherein said at least one guiding profile (6) is made of a plastic material,
wherein the guiding profile (6) comprises walls (7) delimiting two superposed chambers (8) which are intended to receive the excrements and the conveying means (12),
wherein the walls (7) of this guiding profile (6) comprise:
- two side walls (71), vertical, arranged opposite the side surfaces (51) of the associated groove (5),
- horizontal walls, one lower (72) and the other upper (73),
- an intermediate wall (74), to define a lower chamber (81) and an upper chamber (82) wherein the conveying means (12) progress,
wherein said intermediate wall (74) extends between the side walls (71) and is located at a distance from the lower wall (72) and from the upper wall (73),
which intermediate wall (74) comprises at least one through opening (741),
wherein said upper wall (73) comprises at least one upper opening (731),
wherein the conveying means (12) comprise:
- at least one drive member (121) which is inserted within said guiding profiles (6), which at least one drive member (121) comprises several conveying surfaces (121a) which are capable of conveying the excrements present within said guiding profiles (6), and
- means (122) for manoeuvring said at least one drive member (121) within said guiding profiles (6), such that the conveying surfaces (121a) move said excrements within said guiding profiles (6),
wherein at least a drive member (121) consists in an endless strip comprising two parts superposed in one of said guiding profiles (6):
- an upper part (1211a), forming an upper strand, intended to progress into the upper chamber (82), capable of being used to support the solid excrements while enabling liquid excrements to run, and
- a lower part (1211b), forming a lower strand, intended to progress into the lower chamber (82), capable of conveying the liquid excrements running from said upper part (1211a).

2. System according to claim 1, **characterised in that** said at least one through openings (741) of the intermediate wall (74) extends opposite said at least one upper openings (731) of the guiding profile (6) and said upper opening (52) of the associated groove (5),
and wherein the endless strip comprises a width wider, on the one hand, than the width of the through openings (741) of the intermediate wall (74) and, on the other hand, than the width of said at least one upper openings (731) of the guiding profile (6) and/or of said upper opening (52) of the associated groove (5).

3. System according to claims 1 or 2, **characterised in that** the manoeuvring means (122) comprise a set of pulleys which are arranged such that the drive members (121) form a back-and-forth movement unit within one single and same duct (3),
which upper active strand (1211a) and lower active strand (1211b) are thus intended to progress respectively into the upper (82) and lower (81) chambers, in opposite directions against one another.

4. System according to any one of the claims 1 to 3, **characterised in that** said at least one endless strip comprises two opposite faces whereof at least one is equipped with studs forming the conveying surfaces.

5. System according to claim 4, in combination with claims 2 and 3, **characterised in that** the two opposite faces (121b) of the drive members (121) are arranged horizontally and wherein the studs (121a) protrude vertically.

6. System according to any one of the claims 1 to 5, **characterised in that** the floor cover (1) comprises an upper load-bearing surface (2) made of a material capable of undergoing an elastic deformation,
**in that** the ducts (3) are located under said upper load-bearing surface (2),
and **in that** said at least one upper opening (31) of said at least one duct (3) extends between said upper load-bearing surface (2) and said duct (3), for the excrements to run from said upper load-bearing surface (2) up to said ducts (3).

7. System according to claim 6, **characterised in that** the floor cover (1) comprises at least one mat (10) comprising a first face (101) and a second face (102) whereof:
- a first face (101) forms the upper load-bearing surface (2) adapted to support animals, and
- a second face (102), capable of resting on a support surface,
**in that** at least one of said faces (102) comprises grooves (5), each equipped with a longitudinal opening (53),
and **in that** the upper openings (52) of the grooves (5) are located within said mat (10).

8. System according to claim 7, **characterised in that** the second face (102), capable to rest on the support surface, comprises grooves (5) each provided with a continuous lower longitudinal opening (53).

9. System according to any one of claims 1 to 5, **characterised in that** the grooves (5) comprise an upper longitudinal opening (52), leading at the upper load-bearing surface (2).

10. System according to claim 9, **characterised in that** the floor cover (1) comprises a subfloor made of bitumen or of concrete, wherein said grooves (5) are located.

11. System according to claim 10, **characterised in that** the floor cover (1) comprises a set of arbours which are rigidly connected with a support surface (S), this in juxtaposition and while conserving a space defining said grooves (5).

12. System according to claim 9, **characterised in that** the floor cover (1) comprises mats (10) comprising:
- a first face (101) capable of resting on a support surface (S), and
- a second face (102) forming the upper load-bearing surface (2) adapted to supporting animals and comprising grooves (5) each equipped with an upper longitudinal opening (52).

13. Enclosed animal raising structure equipped with a collection system according to any one of claims 1 to 12.

14. Enclosed animal raising structure according to claim 13, **characterised in that** it comprises a circulation lane (C) comprising a longitudinal axis (C') and covered by a floor cover (1), and **in that** the ducts (3) of said floor cover (1) arranged parallel, or at least approximately to said longitudinal axis (C').
